(19) Europäisches Patentamt
European Patent Office
Office européen des brevets

(11) Veröffentlichungsnummer: **0 340 522**
**A2**

# (12) EUROPÄISCHE PATENTANMELDUNG

(21) Anmeldenummer: **89106892.6**

(22) Anmeldetag: **18.04.89**

(51) Int. Cl.⁴: **C08G 63/20 , C08G 63/64 , C08G 63/62**

(30) Priorität: **30.04.88 DE 3814729**

(43) Veröffentlichungstag der Anmeldung:
**08.11.89 Patentblatt 89/45**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Dujardin, Ralf, Dr.**
**Bodelschwinghstrasse 18**
**D-4150 Krefeld(DE)**
Erfinder: **Meyer, Rolf-Volker, Dr.**
**Buchheimerstrasse 23**
**D-4150 Krefeld(DE)**

## (54) Aromatische Polyester und Polyestercarbonate mit Aralkylphenylendgruppen, ihre Herstellung und Verwendung.

(57) Die neuen aromatischen, thermoplastischen Polyester und Polyestercarbonate auf Basis von Diphenolen, Dicarbonsäuren, Kettenabbrechern und gegebenenfalls Verzweigern, die dadurch gekennzeichnet sind, daß die Kettenabbrecher der Formel

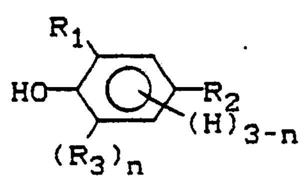

entsprechen, worin
$R_1$, $R_2$ und $R_3$ gleich oder verschieden sind und $C_2$-bis $C_{12}$-Alkyl oder $C_8$- bis $C_{20}$-Aralkyl bedeuten und mindestens einer der Reste $R_1$ oder $R_2$ einen $C_8$ bis $C_{20}$-Aralkylrest darstellt und
n einen Wert von 0,5 bis 1 hat,
eignen sich zur Herstellung von Formkörpern, Folien, Fasern und Filamenten. Die Polyester und Polyestercarbonate zeichnen sich durch eine gute Wärmestabilität aus.

EP 0 340 522 A2

# Aromatische Polyester und Polyestercarbonate mit Aralkylphenylendgruppen, ihre Herstellung und Verwendung

Aromatische Polyester und Polyestercarbonate sind bekannt (W.M. Eareckson, J. Polym. Sci. XL, 399-406 (1959); Andre Conix "Thermoplastic Polyesters from Bisphenols", Ind. Eng. Chem., Vol. 51, No. 2, 147-150, Febr. 1959; Fr 1 177 517, US 3 351 624, DE-AS 1 445 384; G.S. Kolesnikow et al., J. Polym. Sci. USSR, Vol. 9, 1967, S. 1705 bis 1711; US 2 030 331; 3 169 121, 3 409 704, DE-OS 2 714 544, 2 758 030).

Bei den aromatischen Polyestern handelt es sich um amorphe Thermoplaste, die durch eine Polykondensation aus Bisphenolen und aromatischen Dicarbonsäurederivaten hergestellt werden. In ihrem Eigenschaftsbild ähneln sie den Polycarbonaten, deren Wärmeformbeständigkeit sie aber übertreffen. Diese Ähnlichkeit ist bei den Polyestercarbonaten noch ausgeprägter, da ihre Molekülketten aus Ester- und Carbonatstrukturen ausgebaut sind.

Die Notwendigkeit der Endverkappung oder Terminierung von Polycarbonaten mit bestimmten Endgruppen ist lange bekannt. Polycarbonate, die nicht endverkappt sind, erweisen sich im allgemeinen als ungenügend thermostabil, da die freien phenolischen Endgruppen der unverkappten Polycarbonate reaktive Zentren für den Abbau der Polymeren darstellen.

Aufgrund der Ähnlichkeit der aromatischen Polyester und Polyestercarbonate mit den Polycarbonaten ist auch hier die Endverkappung unverzichtbar.

Die Endverkappungsagenzien werden üblicherweise bereits bei der Synthese der Polyester bzw. Polyestercarbonate zugesetzt und sollten aufgrund ihrer chemischen Struktur in der Lage sein, das Kettenwachstum zu beenden. Deshalb werden solche Endverkappungsagenzien auch als Kettenabbrecher bezeichnet und für die Molekulargewichtsregelung der aromatischen Polyester und Polyestercarbonate eingesetzt. Bekannte und kommerziell eingesetzte Endverkappungsagenzien sind hauptsächlich monofunktionelle phenolische Verbindungen, wie beispielsweise Phenol, p-tert.-Butylphenol und p-Isooctylphenol.

Die Verwendung von Alkylphenolen als Endgruppe für aromatische Polyester wird z.B. in der deutschen Offenlegungsschrift 29 40 024 beschrieben. In den europäischen Patentschriften 00 36 080 und 00 88 322 werden monosubstituierte Alkylphenole bzw. deren Chlorkohlensäureester als Endgruppen für aromatische Polyestercarbonate aufgeführt. In der europäischen Patent schrift 00 08 492 und den US-Patentschriften 4 438 255 und 4 330 663 werden weitere Kettenabbrecher, wie Dimethylphenole, aliphatische und aroamtische Carbonsäurechloride beschrieben.

Überraschenderweise wurde nunmehr gefunden, daß sterisch gehinderte Phenole, d.h. insbesondere solche mit anspruchsvollen Substituenten in 2-, 4- und 6-Stellung, nicht nur gut als Endverkappungsagenzien für Polyester-und Polyestercarbonatketten einsetzbar sind, sondern sich die entsprechenden Produkte zusätzlich durch vorteilhafte Eigenschaftsänderungen auszeichnen.

Gegenstand der vorliegenden Erfindung sind daher aromatische Polyester und Polyestercarbonate mit mittleren Molekulargewichten ( $\overline{M}_n$) von 5000 bis 100.000, vorzugsweise von 7500 bis 25.000, auf Basis von Diphenolen, Dicarbonsäuren, Kettenabbrechern und gegebenenfalls Verzweigern, dadurch gekennzeichnet, daß die Kettenabbrecher der Formel (I)

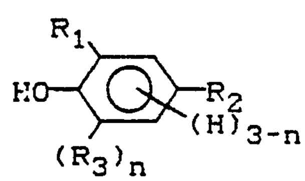

(I)

entsprechen, worin

$R_1$, $R_2$ und $R_3$ gleich oder verschieden sind und $C_2$- bis $C_{12}$-Alkyl oder $C_8$- bis $C_{20}$-Aralkyl bedeuten, wobei Aryl (Ar) vorzugsweise für Phenyl, Diphenyl oder Naphthyl steht, und worin mindestens einer der Reste $R_1$ oder $R_2$ einen $C_8$ bis $C_{20}$-Aralkylrest darstellt und

n einen Wert von 0,5 bis 1, vorzugsweise 0,6 bis 0,9, hat.

Die Kettenabbrecher der Formel (I) stellen ein Gemisch aus 2,4- und 2,4,6-Alkylierungsprodukten von Phenolen dar und können sowohl als einzelne Verbindungen (n = 1) als auch im Gemisch untereinander eingesetzt werden. Sie sind entweder literaturbekannt oder nach literaturbekannten Verfahren, beispielsweise durch Alkylierung von Phenolen, erhältlich (siehe beispielsweise K.D. Bode in Houben-Weyl, "Methoden der organischen Chemie", Vol. 6/1c, Phenole, Teil 2, Seiten 925 ff, Thieme-Verlag 1976).

In Frage kommende Kettenabbrecher sind beispielsweise Reaktionsprodukte aus Phenol und Styrol,

Phenol und α-Methylstyrol, Phenol und p-Methylstyrol, p-Isooctylphenol und Styrol, Dodecylphenol-Gemische mit Styrol, Phenol mit Styrol und Ethylen und Phenol mit Isobuten und Styrol.

Genannt seien beispielsweise folgende Kettenabbrecher mit mindestens 50 % trisubstituiertem Anteil, erhalten aus 2,4-Bis- und 2,4,6-Tris(1-phenylethyl)phenol; 2,4-Bis- und 2,4,6-Tris(1-methyl-1-phenylethyl)-phenol; 4-Dodecyl-2-(1-phenylethyl)- und 4-Dodecyl-2,6-bis(1-phenylethyl)-phenol; 4-Isobutyl-2-(1-phenylethyl)- und 4-Isobutyl-2,6-bis(1-phenylethyl)phenol; 2-Isobutyl-4-(1-phenylethyl)- und 2-Isobutyl-4,6-bis(1-phenylethyl)phenol; 2,4-Bis- und 2,4,6-Tris[1-(4-methylphenyl)ethyl]-phenol, vorzugsweise Gemische aus 2,4-Bis- und 2,4,6-Tris(1-phenylethyl)phenol; 2,4-Bis und 2,4,6-Tris(1-methyl-1-phenylethyl)phenol; 4-Dodecyl-2-(1-phenylethyl)- und 4-Dodecyl-2,6-bis(1-phenylethyl)phenol; 4-Isobutyl-2-(1-phenylethyl)- und 4-Isobutyl-2,6-bis(1-phenylethyl)phenol.

Die Bestimmung des mittleren Molekulargewichte der eingesetzten technischen Arylalkylphenolgemische der allgemeinen Formel (I) erfolgt durch Ermittlung der OH-Zahl (OH-Z) nach bekannten Methoden. Die OH-Zahl ist eine Maßzahl, die angibt, wieviel Milligramm Kaliumhydroxid der Essigsäuremenge äquivalent sind, die von 1 g Substanz bei der Acetylierung gebunden wird. Die Bestimmung der OH-Zahl erfolgt nach allgemein bekannten Methoden, wie von E. Schröder, G. Müller und K.-F. Arndt in "Leitfaden der Polymercharakterisierung", S. 23 ff (Akademie Verlag Berlin 1982) beschrieben.

Das mittlere Molekulargewicht (MG) der eingesetzten technischen Gemische der allgemeinen Formel (I) erfolgt dementsprechend nach der allgemein bekannten Formel

$$\overline{MG} = \frac{5,6 \cdot 10^4}{\text{OH-Zahl}} \quad (g \cdot mol^{-1})$$

Die OH-Zahl der eingesetzten Arylalkylphenolgemische der allgemeinen Formel (I) liegt zwischen Werten von 67 bis 248, bevorzugt sind Werte zwischen 100-185. Den oben aufgeführten OH-Zahlen entsprechen mittlere Molekulargewichte der Verbindungen von 226 bis 836 g/Mol und im Vorzugsbereich von 303 bis 560 g/Mol.

Die Menge an Kettenabbrechern der Formel (I) zur Einstellung der Molekulargewichte $\overline{M}n$ zwischen 5000 g/Mol und 100.000 g/Mol bei den erfindungsgemäßen Polymeren beträgt in üblicher Weise etwa 0,5 Mol-% bis 10 Mol-%, vorzugsweise 2 Mol-% bis 7 Mol-%, bezogen auf die eingesetzten Mole an Diphenol.

Bei der zusätzlichen Mitverwendung von Verzweigern, also von dreifunktionellen oder mehr als dreifunktionellen Verbindungen in den üblichen Mengen von 0,05 Mol-% bis 2 Mol-%, bezogen auf die eingesetzten Mole an Diphenol, beträgt die Menge an Kettenabbrechern der Formel (I) etwa 0,5 bis 10 Mol-%, vorzugsweise 3 bis 6 Mol-%.

Gegenstand der vorliegenden Erfindung ist ferner ein Verfahren zur Herstellung von aromatischen Polyestern und aromatischen Polyestercarbonaten mit Molekulargewichten $\overline{M}n$ (Zahlenmittel, ermittelt durch Gelchromatographie nach vorheriger Eichung) von mindestens 5000 g/Mol, vorzugsweise von 7500 g/Mol bis 100 000 g/Mol und insbesondere von 9000 g/Mol bis 25 000 g/Mol, nach dem bekannten Zweiphasengrenzflächenverfahren, nach dem bekannten Verfahren in homogener Lösung (dem sogenannten Pyridinverfahren) oder nach dem bekannten Schmelzumesterungsverfahren durch Umsetzung von reaktiven Kohlensäurederivaten mit Diphenolen, aromatischen Dicarbonsäurederivaten, Kettenabbrechern und gegebenenfalls mit Verzweigern, das dadurch gekennzeichnet ist, daß man als Kettenabbrecher Phenole der Formel (I) einsetzt.

Die erfindungsgemäß einsetzbaren Diphenole können sowohl einkernig als auch mehrkernig sein, sie können zusätzlich Heteroatome enthalten und/oder zusätzlich substituiert sein, wobei Halogen und Alkyl, insbesondere Chlor, Brom, Methyl und Ethyl die bevorzugten Substituenten sind.

Erfindungsgemäß einsetzbare Diphenole sind vorzugsweise solche der Formel (II)

HO-Z-OH (II),

worin

Z ein zweiwertiger, aromatischer Rest mit 6 bis 30 C-Atomen ist, der unsubstituiert oder durch Halogen, beispielsweise Chlor oder Brom, oder durch Alkyl, beispielsweise Methyl oder Ethyl, substituiert sein kann.

Geeignete Diphenole sind:

Hydrochinon

Resorcin

Dihydroxydiphenyle

Bis-(hydroxyphenyl)-alkane

Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α′-Bis-(hydroxyphenyl)-diisopropylbenzole
sowie deren kernalkylierte und kernhalogenierte Verbindungen. Diese und weitere geeignete Diphenole sind z.B. in den US-Patentschriften 3 028 365, 2 999 835, 3 148 172, 3 271 368, 2 991 273, 3 271 367, 3 280 078, 3 014 891 und 2 999 846, in den deutschen Offenlegungsschriften 1 570 703, 2 063 050, 2 036 052, 2 211 956, der französischen Patentschrift 1 561 518 und in der Monographie "H. Schnell, Chemistry and Physics of Polycarbonates, Interscience Publiers, New York, 1964" beschrieben.

Bevorzugte Diphenole sind z.B.:
4,4′-Dihydroxydiphenyl
2,2-Bis-(4-hydroxyphenyl)-propan
2,4-Bis(4-hydroxyphenyl)-2-methylbutan
1,1-Bis-(4-hydroxyphenyl)-cyclohexan
α,α′-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α′-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole sind z.B.:
2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxypahenyl)-cyclohexan.

Es können auch beliebige Mischungen der vorgenannten Diphenole verwendet werden.

Die Carbonat-Vorstufe kann entweder ein Carbonylhalogenid oder ein Bishalogenformiat sein. Die Carbonylhalogenide umfassen Carbonylbromid, Carbonylchlorid und deren Gemische. Die zur Verwendung geeigneten Bishalogenformiate umfassen die Bishalogenformiate zweiwertiger Phenole, wie Bischlorformiate von 2,2-Bis-(4-hydroxyphenyl)-propan, 2,2-Bis-(4-hydroxy-3,5-dichlorphenyl)-propan und Hydrochinon. Bevorzugt ist Carbonylchlorid, auch als Phosgen bekannt.

Als Dicarbonsäurederivate werden Dicarbonsäuredichloride und Dicarbonsäuredibromide verwendet, wie Terephthalsäuredichlorid, Isophthalsäuredichlorid oder Phthalsäuredichlorid sowie deren Gemische. Bevorzugt sind Terephthalsäure- und Isophthalsäuredichlorid sowie deren Gemische.

Als Verzweigungsmittel können beispielsweise 3- oder mehrfunktionelle Carbonsäurechloride, wie Trimesinsäuretrichlorid, Cyanursäuretrichlorid, 3,3′, 4,4′-Benzophenon-tetracarbonsäuretetrachlorid, 1,4,5,8-Naphthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2, 4,6-Dimethyl-2,4,6-tri-(4-hydroxyphenyl)-hepten, 1,3,5-Tri-(4-hydroxyphenyl)-benzol, 1,1,1-Tri-(4--hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenyl, Tetra-(4-hydroxyphenyl)-methan, 2,6-Bis-(2-hydroxy-5-methyl-benzyl)-4-methyl-phenyl, 2-(4-Hydroxyphenyl)-2-(2,4-dihydroxyphenyl)-propan, Tetra-(4-[4-hydroxyphenyl-isopropyl]-phenoxy)-methan, 1,1-Bis-[(4,4″-dihydroxytriphenyl)-methyl]-benzol, in Mengen von 0,01 bis 1,0 Mol-% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

Die Herstellung der erfindungsgemäßen aromatischen Polyestercarbonate oder Polyester erfolgt, wie oben erwähnt, nach bekannten Methoden. In Frage kommen das bekannte Zweiphasengrenzflächenverfahren, das beispielsweise durch V.V. Korshak und S.V. Vinogradova in "Polyester", Pergamon Press, 1965,

Seite 448, beschrieben ist, die Polykondensation in homogener Lösung (dem sogenannten Pyridinverfahren), das beispielsweise beschrieben ist in der deutschen Offenlegungsschrift DE-OS 2 714 544 und in der oben genannten Literaturstelle, und das bekannte Schmelzumesterungsverfahren, wie in der deutsche Auslegeschrift DE-AS 1 495 626 oder in "Polyesters", Pergamon Press 1965, S. 448 ff., beschrieben.

Die Reaktionsbedingungen für die erfindungsgemäß geeigneten Herstellungsvarianten, also Reaktionstemperaturen, Reaktionsdrucke, gegebenenfalls einzusetzende Lösungsmittel, geeignete Katalysatoren, Reaktionszeiten, einzuhaltende Konzentrationen der Reaktanden im gegebenenfalls einzusetzenden Lösungsmittel, Katalysatormenge, Art und Menge an basischen Verbindungen etc. sind bekannt und zu den bekannten Bedingungen anwendbar.

Die zu verwendenden Vorrichtungen, Reaktionsgefäße, Rührwerke etc. sind ebenfalls geläufig.

Die Herstellung der erfindungsgemäßen Polyester und Polyestercarbonate erfolgt vorzugsweise nach dem Phasengrenzflächenverfahren.

Hierbei wird im allgemeinen wie folgt verfahren: Die Diphenole, vorzugsweise die der Formel (II), werden in wäßriger alkalischer Phase gelöst. Dazu werden die zur Herstellung der erfindungsgemäßen Polyester und Polyestercarbonate erforderlichen Kettenabbrecher der Formel (I) in Mengen von 0,5 bis 10 Mol-%, vorzugsweise 2 bis 7 Mol-%, bezogen auf die Mole Diphenole, zugegeben. Ebenfalls zugegeben wird, gelöst in einem geeigneten Lösungsmittel, die Dicarbonsäurederivate, bevorzugt die entsprechenden Dichloride.

Dann wird nach Zugabe einer inerten, vorzugsweise Polyester- oder Polyestercarbonat-lösenden, organischen Phase bei Reaktionstemperaturen von 0 bis 40 °C mit Phosgen nach der Methode der Phasengrenzflächenkondensation umgesetzt, wenn Polyestercarbonate hergestellt werden sollen.

Dabei ist es notwendig, daß sich die Verbindungen der Formel (I) gut in wäßrigem alkalischem Medium lösen. Hierbei zeigen die Verbindungen der Formel (I) eine vergleichbare Löslichkeit und Reaktivität wie die üblicherweise als Endgruppen verwendeten Phenole, wie Phenol, p-tert.-Butylphenol und p-Isooctylphenol. Das ist umso überraschender, weil bereits 2,6-Di-tert.-butyl-substituierte Phenole im wäßrigen alkalischen Medium unlöslich sind (K. Findeisen in Houben-Weyl, "Methoden der organischen Chemie", Vol. 6/1c, Seite 1196 ff., Thieme-Verlag 1976).

Wegen des hohen Anteils an 2,4,6-trisubstituierten Phenolen ($n > 0,5$ bedeutet mehr als 50 % trisubstituierte Verbindungen ) im Kettenabbrechergemisch der Formel (I), war die Löslichkeit nicht erwartet worden. Die gute Eignung der Verbindungen der Formel (I) als Kettenabbrecher für die Synthese von aromatischen Polyestern und Polyestercarbonaten nach dem Phasengrenzflächenverfahren war daher nicht vorhersehbar.

Die gegebenenfalls mitzuverwendenden 0,05 bis 2 Mol-%, bezogen auf eingesetzte Diphenole, an Verzweigern können entweder mit den Diphenolen selbst und den Kettenabbrechern der Formel (I) in der wäßrig-alkalischen Phase vorgelegt werden, oder in einem organischen Lösungsmittel gelöst vor der Phosgenierung zugegeben werden (bei der Herstellung von Polyestercarbonaten).

Anstelle der Diphenole können auch deren Mono- und/oder Bis-chlorkohlensäureester mitverwendet werden, wobei diese in organischen Lösungsmitteln gelöst zugegeben werden. Die Menge an Kettenabbrechern der Formel (I) sowie an Verzweigern richtet sich dann nach Molen an Diphenolat-Struktureinheiten, also bei Einsatz der Diphenole der Formel (II) nach den -O-Z-O-Struktureinheiten.

Die erfindungsgemäß einzusetzenden Kettenabbrecher der Formel (I) können also vor Beginn oder während der Reaktion zugesetzt werden. Es muß jedoch noch genügend Säurechlorid und/oder Phosgen zur Verfügung stehen, damit sie reagieren und die Kette begrenzen können.

Beispielsweise kann der Kettenabbrecher zusammen mit dem Diphenol eingesetzt werden, in der Lösung der Chloride der aromatischen Dicarbonsäuren enthalten sein oder dem Reaktionsgemisch nach Herstellung eines Vorkondensates zugesetzt werden.

Als geeignete organische Lösungsmittel für die Lösung der Kettenabbrecher der Formel (I), den Terephthal- oder Isophthalsäuredichloriden und den aromatischen Polyestern und Polyestercarbonaten können die bekannten organischen Lösungsmittel, wie Dichlormethan, Chloroform, Tri- und Tetrachlorethylen, Tetrachlorethane, Chlorbenzol, Dichlorbenzole und Gemische dieser Verbindungen eingesetzt werden.

Die Herstellung der erfindungsgemäßen Polyester und Polyestercarbonate nach dem Phasengrenzflächenverfahren kann in üblicher Weise duch Katalysatoren wie tertiäre Amine, insbesondere tertiäre aliphatische Amine, wie Tributylamin oder Triethylenamin, katalysiert werden.

Die Katalysatoren können in Mengen von 0,01 bis 5 Mol-% (bezogen auf eingesetzte Diphenole) eingesetzt werden. Die Katalysatoren werden in üblicher Weise für die Polykondensationsreaktion der wäßrig-alkalischen Phase zugegeben. Die Isolierung der erfindungsgemäßen aromatischen Polyester und Polyestercarbonate kann nach der von der Polycarbonatsynthese nach dem Zweiphasengrenzflächenverfahren bekannten Methode erfolgen. Hierbei wird die organische, den aromatischen Polyester oder das

Polyestercarbonat gelöst enthaltende Phase abgetrennt, gewaschen und anschließend der aromatische Polyester oder das Polyestercarbonat durch Eindampfen der Lösung isoliert, wobei als Endstufe des Aufarbeitungsprozesses vorzugsweise ein Ausdampfextruder benutzt wird.

Bei den aromatischen Polyestercarbonaten kann sowohl der Ester- als auh der Carbonatanteil in Form von Blöcken oder statistisch verteilten Polymeren vorliegen. Die Herstellungsweise ist ebenfalls bekannt (vergl. beispielsweise die DE-PS 3 236 382). Die erfindungsgemäßen aromatischen Polyester und Polyestercarbonate zeigen beispielsweise verglichen mit entsprechenden, aber mit Phenol, o-Phenylphenol, p-Phenylphenol, Dimethylphenolen, p-Iso-octylphenol, p-Nonylphenol, Kresolen, Halogenphenol oder p-tert.-Butylphenol terminierten aromatischen Polyester oder Polyestercarbonaten eine deutlich verbesserte Fließfähigkeit bei vergleichbarem mittlerem Molekulargewicht.

Die erfindungsgemäßen Polyester und Polyestercarbonate sind bei Temperaturen von 260 °C bis 350 °C in üblicher Weise thermoplastisch verarbeitbar. Durch Spritzguß oder Extrusion können beliebige Formkörper, Folien, Fasern und Filamente in bekannter Weise hergestellt werden.

Den erfindungsgemäßen Polyestern und Polyestercarbonaten können die üblichen Additive wie Alterungsschutzmittel gegen UV-Einwirkung, $O_2$-Einwirkung und Feuchtigkeitseinwirkung, Flammschutzmittel, Verarbeitungsmittel, wie Gleitmittel, Entformungsmittel und Weichmacher sowie Füllstoffe, wie Glasfasern, Glaskugeln, Ausbest- oder Kohlenstoffasern, Kieselgur, Kaolin, Mineralfasern, Gesteinsmehl in bekannter Weise zugesetzt werden.

In den nachfolgenden Beispielen ist die relative Lösungsviskosität $\eta_{rel}$ in Dichlormethan bei 25 °C und einer Konzentration von 0,5 Gew.-% bestimmt worden.

## Beispiel 1

In einen Stahlkessel mit intensiv wirkendem Rührer wurden unter Stickstoffatmosphäre 2,28 kg Bisphenol A (BPA), 1,84 kg 45 gew.-%ige wäßrige Natronlauge, 58 l Wasser und 25 l Dichlormethan gefüllt und das Gemisch bis zur vollständigen Lösung des BPA gerührt.

In das intensiv gerührte Zweiphasengemisch wurde dann unter Wasserkühlung innerhalb 15 Min. eine Lösung von je 737 g Iso- und Terephthalsäurechlorid und 184,6 g = 5 Mol-%, bezogen auf Bisphenol A, eines technischen Gemisches aus 2,4-Di- und 2,4,6-Tri-(1-phenylethyl)phenol (OH-Zahl = 150), gelöst in 4,3 kg Dichlormethan, gegeben und 1 Stunde nachgerührt. Die Temperatur des Reaktionsgemisches überstieg dabei nicht 22 °C. Durch Zugabe von Natriumhydroxid wurde der pH-Wert des Gemisches bei 12 bis 13 gehalten.

Unter fortgesetztem Rühren erfolgte die Einleitung von 535 g Phosgen, wobei die Temperatur wieder bei ca. 20 °C und der pH-Wert bei 12 bis 13 gehalten wurde. Nach der Einleitung des Phosgens wurden 14 ml N-Ethylpiperidin zugesetzt und noch 1 Stunde nachgerührt.

Nach Abtrennung der wäßrig-alkalischen Phase wurde die organische Phase zunächst mit verdünnter Phosphorsäure, dann mit Wasser salzfrei gewaschen und ca. 50 % des Dichlormethans unter Normaldruck abdestilliert. Die verbliebene Lösung wurde mit 15 l Chlorbenzol verdünnt und die Abdestillation des Dichlormethans fortgesetzt, bis die Sumpftemperatur ca. 80 °C getrug, das Polyestercarbonat sodann im Vakuumextruder bei 320 °C vom Chlorbenzol befreit, als Strang abgezogen und granuliert. Das Granulat besaß eine relative Lösungsviskosität $\eta_{rel}$ von 1,271.

## Beispiel 2

Wie in Beispiel 1 beschrieben, wurde ein Polyestercarbonat mit 205,88 g = 5 Mol-% eines technischen Gemisches aus 2,4-Di- und 2,4,6-Tri-(1-methyl-1-phenylethyl) phenol (OH-Zahl = 136) hergestellt, $\eta_{rel}$ = 1,304.

## Beispiel 3

Wie in Beispiel 1 beschrieben, wurde ein Polyestercarbonat mit 417,9 g = 5 Mol-% eines technischen Gemisches aus den 2,4- und 2,4,6-Stellungsisomeren der Alkylierungsprodukte von Phenol mit Isobuten und Styrol (OH-Zahl = 67) hergestellt, $\eta_{rel}$ = 1,299.

Vergleichsversuche A bis C

Wie in Beispiel 1 beschrieben, wurden Polyestercarbonate mit jeweils 5 Mol-% an folgenden Kettenabbrechern hergestellt:

| Vgl.-Bsp. | Kettenabbrecher | (g) | $\eta_{rel}$ | OHZ |
|---|---|---|---|---|
| A | p-tert.-Butylphenol | 75 | 1,265 | 373 |
| B | Phenol | 47 | 1,268 | 596 |
| C | p-iso-Octylphenol | 103 | 1,294 | 272 |

Beispiel 4

In 110 g 45 gew.-%iger Natronlauge und 2800 ml destilliertem Wasser werden 91,2 g Bisphenol A unter Stickstoff gelöst. In diese Lösung werden 0,645 g (0,4 Mol-%, bezogen auf Bisphenol A) Tetrabutylammoniumbromid eingetragen und anschließend werden 2250 ml Dichlormethan zugegeben.

In dieses intensiv gerührte Zweiphasengemisch werden unter Wasserkühlung innerhalb von 5 Minuten bei einer Innentemperatur von 20 bis 25 °C und bei einem pH-Wert 12 bis 13 eine Lösung von 40,6 g Isophthalsäuredichlorid und 40,6 g Terephthalsäuredichlorid, gelöst in 250 ml Dichlormethan, und gleichzeitig eine Lösung 7,46 g = 5 Mol-% eines technischen Gemisches aus 2,4-Di- und 2,4,6-Tri-(1-phenylethyl)-phenol (OH-Zahl = 150) sowie 250 ml Dichlormethan eingetragen. Nach beendeter Zugabe wird 5 Minuten nachgerührt. Anschließend wird die alkalischwäßrige Phase abgetrennt, die organische Phase erst mit verdünnter Phosphorsäure und dann mit Wasser gewaschen, bis das Waschwasser eine Leitfähigkeit von $0,1 \bullet 10^{-4}$ S/cm besitzt. Die Isolierung des Polyesters erfolgt durch Eindampfen der Polyesterlösung im Vakuumtrockenschrank bei 120 °C. Das erhaltene Material besitzt eine relative Lösungsviskosität $\eta_{rel}$ von 1,268.

Beispiel 5

Wie in Beispiel 4 beschrieben, wurde ein aromatischer Polyester mit 16,72 g = 5 Mol-% eines technischen Gemisches aus den 2,4- und 2,4,6-Stellungsisomeren der Alkylierungsprodukte von Phenol mit Isobuten und Styrol (OH-Zahl = 67) hergestellt, $\eta_{rel}$ = 1,327.

Vergleichsversuche D bis F

Wie in Beispiel 4 beschrieben, jedoch mit der 1,25 fachen Menge an Reaktanden und Lösungsmitteln, wurden aromatische Polyester mit jeweils 5 Mol-% an folgenden Kettenabbrechern hergestellt:

| Vgl.-Vers. | Kettenabbrecher | (g) | $\eta_{rel}$ | OHZ |
|---|---|---|---|---|
| D | p-tert.-Butylphenol | 3,75 | 1,339 | 373 |
| E | Phenol | 2,35 | 1,337 | 596 |
| F | p-iso-Octylphenol | 5,15 | 1,285 | 272 |

Die durch Gelpermeatonschromatographie nach vorhergehender Eichung ermittelten mittleren Molekulargewichte (Mn) sowie die mit einem Contravers-Rheomat 30 bestimmten Schmelzviskositäten ($\eta_{melt}$) bei 320 °C und einer Schubspannung $\tau$ = $10^3$ Pa, sind der Tabelle 1 für die Beispiele 1 bis 5 und die Vergleichsversuche A bis F zu entnehmen.

| Bsp. | Mn (kg/Mol) | $\eta_{melt}$ (Pa.s) |
|---|---|---|
| 1 | 13,387 | 800 |
| 2 | 13,913 | 1100 |
| 3 | 14,807 | 1250 |
| A (Vergleich) | 11,164 | 2240 |
| B (Vergleich) | 12,408 | 2646 |
| C (Vergleich) | 13,249 | 2200 |
| 4 | 9,964 | 3200 |
| 5 | 11,366 | 3350 |
| D (Vergleich) | 10,398 | 4100 |
| E (Vergleich) | 9,878 | 5180 |
| F (Vergleich) | 9,497 | 3900 |

## Ansprüche

1. Thermoplastische, aromatische Polyester und Polyestercarbonate mit mittleren Molekulargewichten $\overline{M}_n$ (Zahlenmittel, ermittelt durch Gelchromatographie nach vorheriger Eichung) von 5.000 bis 100.000 auf Basis von Diphenolen, Dicarbonsäuren, Kettenabbrechern und gegebenenfalls Verzweigern, dadurch gekennzeichnet, daß die Kettenabbrecher der Formel

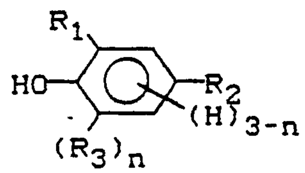

entsprechen, worin
$R_1$, $R_2$ und $R_3$ gleich oder verschieden sind und $C_2$-bis $C_{12}$-Alkyl oder $C_8$- bis $C_{20}$-Aralkyl bedeuten und mindestens einer der Reste $R_1$ oder $R_2$ einen $C_8$ bis $C_{20}$-Aralkylrest darstellt und
n einen Wert von 0,5 bis 1 hat.

2. Polyester und Polycarbonate gemäß Anspruch 1, dadurch gekennzeichnet, daß n einen Wert von 0,6 bis 0,9 hat.

3. Polyester und Polyestercarbonate gemäß Ansprüchen 1 und 2, dadurch gekennzeichnet, daß das mittlere Molekulargewicht $\overline{M}_n$ 7500 bis 25.000 beträgt.

4. Verfahren zur Herstellung der thermoplastischen aromatischen Polyester und Polyestercarbonate gemäß Ansprüchen 1 bis 3 nach dem bekannten Zweiphasengrenzflächenverfahren, nach dem bekannten Verfahren in homogener Lösung oder nach dem bekannten Schmelzumesterungsverfahren durch Umsetzung von reaktiven Kohlensäurederivaten mit Diphenolen, aromatischen Dicarbonsäuren, Kettenabbrechern und gegebenenfalls mit Verzweigern, dadurch gekennzeichnet, daß man also Kettenabbrecher Phenole der Formel des Anspruchs 1 einsetzt.

5. Verwendung der thermoplastischen aromatischen Polyester und Polyestercarbonate der Ansprüche 1 bis 3 zur Herstellung von Formkörpern, Folien, Fasern und Filamenten.